# EUROPÄISCHE PATENTSCHRIFT

(11) **EP 4 098 004 B1**
(45) Veröffentlichungstag und Bekanntmachung des Hinweises auf die Patenterteilung: **29.04.2026**
(21) Anmeldenummer: 20702992.7
(22) Anmeldetag: 30.01.2020
(51) Int. Cl.: H04L 9/40, H04W 12/06, H04W 12/55, H04W 4/40, B60R 25/04, H04W 84/12

(54) **VERFAHREN ZUM AUFBAUEN EINER DATENVERBINDUNG SOWIE DATENÜBERTRAGUNGS-SYSTEM**
METHOD FOR SETTING UP A DATA CONNECTION AND DATA TRANSMISSION SYSTEM
PROCÉDÉ POUR ÉTABLIR UNE LIAISON DE DONNÉES ET SYSTÈME DE TRANSMISSION DE DONNÉES

(43) Veröffentlichungstag der Anmeldung: 07.12.2022
(73) Patentinhaber: ZF CV Systems Global GmbH, 3006 Bern (CH)
(72) Erfinder: MEYER-RÖSSLER, Philip, 31180 Giesen (DE); RICKE, Janik, 31311 Uetze (DE)
(74) Vertreter: Schäferjohann, Volker
(86) Internationale Anmeldenummer: PCT/EP2020/052224
(87) Internationale Veröffentlichungsnummer: WO 2021/151486

(56) Entgegenhaltungen:
- US-A1- 2011 081 890
- US-A1- 2013 304 879
- US-A1- 2016 014 820

## Beschreibung

Die Erfindung betrifft ein Verfahren zum Aufbauen einer Datenverbindung zwischen einem Endgerät in einem Fahrzeug und einem Zentralmodul eines stationären lokalen Netzwerks, sowie ein Datenübertragungs-System zur Durchführung des Verfahrens.

Auf automatisierten bzw. semi-automatisierten Betriebshöfen bzw. Speditionshöfen kann ein stationäres lokales Netzwerk vorhanden sein, das ein räumlich begrenztes Umfeld des Betriebshofes abdeckt und über das ein Datenaustausch zwischen einem Endgerät in einem eintreffenden Fahrzeug und dem Betriebshof stattfinden kann. Derzeitige automatisierte bzw. semi-automatisierte Betriebshöfe nutzen die Datenverbindung zwischen dem Endgerät und einem Zentralmodul des stationären lokalen Netzwerkes allerdings nicht für eine Erhöhung des Automatisierungsgrades.

Vielmehr muss der Fahrer des eintreffenden Fahrzeuges bei Ankunft am Betriebshof von seinem Fahrzeug absteigen, um sich zu identifizieren und authentisieren sowie herauszufinden, an welcher Be- und Entladestelle, z.B. Rampe, eine geladene Fracht entladen werden bzw. von welcher Be- und Entladestelle eine zu transportierende Fracht abgeholt werden soll. Dies ist zum einen zeitaufwendig und zum anderen kommt es im internationalen Fahrerumfeld immer wieder zu Verständigungsproblemen zwischen dem Fahrer und den Mitarbeitern auf dem Betriebshof. Dadurch können Be- bzw. Entladungsvorgänge aber auch weitere betriebliche Abläufe auf dem Betriebshof nicht reibungslos und schnell durchgeführt werden.

Bisher sind also keine automatisierte Koordination und Kommunikation über das bereits vorhandene stationäre lokale Netzwerk vorgesehen.

Ein automatisiertes Aufbauen einer Datenverbindung ist beispielsweise in DE 101 42 193 A1 beschrieben, wobei eine Datenverbindung zwischen einem Endgerät in einem Fahrzeug und einem WAP-Gateway hergestellt wird. Zum Herstellen der Datenverbindung werden Zugangsdaten herangezogen, die entweder auf dem Fahrzeug selbst gespeichert sind oder je nach Zugangsart zusätzlich angefordert werden können.

In DE 103 598 36 A1 ist das automatische Aufbauen einer Datenverbindung zwischen Endgeräten in einem Fahrzeug und einer Zentraleinheit außerhalb des Fahrzeuges beschrieben, wobei vor dem Austausch von Daten eine Login-Prozedur ausgeführt wird. Dazu wird von der Zentraleinheit eine SMS über das Mobilfunknetz an ein Mobiltelefon im Fahrzeug übermittelt. Die Endgeräte im Fahrzeug haben Zugriff auf das Mobiltelefon und können die übermittelte SMS bzw. die Nachricht daraufhin auswerten, ob sie zur Durchführung der Login-Prozedur aufgefordert werden. Demnach findet kein automatisiertes Verbinden und Authentifizieren eines Endgerätes in einem lokalen Netzwerk statt.

In WO 00/70530 ist weiterhin beschrieben, Daten eines Fahrzeuges automatisch auszulesen, wenn dieses auf einem Betriebshof ankommt. Dazu werden vorprogrammierte Sender bzw. Empfänger verwendet, die dauerhaft senden bzw. empfangen und sich dazu nicht in ein stationäres lokales Netzwerk einwählen.

In DE 10 2014 201 468 B3 ist vorgeschlagen, dass Zugangsdaten nur lokal zur Verfügung gestellt werden, so dass sichergestellt ist, dass nur ein sich vor Ort befindlicher Benutzer die Zugangsdaten für ein mobiles Gerät (z. B. Smartphone, Tablet-Computer) verwenden kann. In DE 10 2017 009 015 A1 ist zum Autorisieren vorgesehen, dass der Benutzer des Endgerätes eine Aufgabe vom Zentralmodul des Netzwerkes bekommt und dieses auf dem Endgerät erledigen muss.

Weiterhin sind auch Kamerasysteme bekannt, die Fahrzeuge anhand eines Kamerabildes erkennen und identifizieren können.

Außerdem ist aus DE 101 44 002 A1 bekannt, über einen Organizer Fahrzeugfunktionen eines Fahrzeuges auszuführen. Dazu sind auf dem Organizer auswählbare Interaktionscodes gespeichert, die über einen Autorisationscode freigeschaltet und anschließend aktiviert werden können, um eine dem Interaktionscode entsprechende Fahrzeugfunktion auszuführen, beispielsweise das Öffnen des Fahrzeuges.

In WO 2016/106774 A1 ist zudem beschrieben, ein Terminal über zwei auf ein Touchscreen von einem Benutzer gezeichnete Muster zu entsperren. Aus dem Dokument US2013304879A1 ist ein Verfahren zum Konfigurieren eines Endgerätes für einen Zugriff auf ein von einer Netzwerkeinrichtung verwaltetes drahtloses Kommunikationsnetz beschrieben.

Aus dem Dokument US20110081890A1 ist ein Verfahren und eine entsprechende Vorrichtung zum Bereitstellen eines Zugangs zu einem WLAN für einen Mobilfunkteilnehmer bekannt. Sie beinhalten das Identifizieren eines mobilen Multimode-Endgeräts. Anhand der Identifikation wird das WLAN berechtigt, dem mobilen Endgerät einen Zugang zu gewähren. Das mobile Endgerät erhält dann als Mobilfunkteilnehmer Zugang zum WLAN und ermöglicht die Interoperabilität zwischen den beiden Netzen.

Aus dem Dokument US2016014820A1 ist es bekannt die Netzwerkinformation über einen RFID-Tag oder NFC-Tag, der an dem WLAN-Router angebracht ist, und eine entsprechende Kommunikation auslöst, an ein Mobilgerät zu übertragen. Dafür muss das Mobilgerät aber mit dem Router zusammengebracht werden, so dass das Mobilgerät den WLAN-Router praktisch berührt.

Aufgabe der Erfindung ist, ein Verfahren zum Aufbauen einer Datenverbindung zwischen einem Endgerät in einem Fahrzeug und einem Zentralmodul eines stationären lokalen Netzwerks eines Betriebshofes anzugeben, mit dem ein Zugang eines Fahrzeuges und eine Kommunikation mit einem Fahrzeug automatisiert erfolgen kann und, dass eine automatisierte Koordination von einem Fahrzeug auf dem Betriebshof durchführt.

Diese Aufgabe wird durch ein Verfahren nach Anspruch 1 sowie ein Dienstleister-Backend gemäß dem weiteren unabhängigen Anspruch 12 und ein Zentralmodul eines stationären, lokalen Netzwerkes gemäß Anspruch 13 gelöst. Die Unteransprüche geben bevorzugte Weiterbildungen an.

Dadurch kann vorteilhafterweise in einem voll-automatisierten Verfahren eine sichere und verifizierte Datenverbindung zwischen dem Endgerät und dem stationären lokalen Netzwerk hergestellt sowie auch eine Autorisierung bzw. Zugangsberechtigung erteilt werden, ohne dass der Fahrer einzugreifen braucht oder ein anderweitiger manueller Eingriff nötig ist. Damit kann der Verbindungsaufbau vollkommen sprachunabhängig und ohne weitere manuelle Zwischenschritte erfolgen, wodurch der Automatisierungsgrad erhöht und der generelle Ablauf auf dem Betriebshof vereinfacht und beschleunigt wird. Zudem ist keine weitere aktive Abfrage oder aktive Anforderung nötig, da die einzelnen Vorgänge automatisiert zu den gegebenen Zeitpunkten durchgeführt werden. Die Koordination und Kommunikation auf dem Betriebshof wird daher insgesamt stark vereinfacht.

Unter dem Begriff "Authentisieren" wird hierbei verstanden, dass ein Teilnehmer, hier das Fahrzeug bzw. das Endgerät, seine eigene über z.B. einen Benutzernahmen behauptete Identität nachweist, beispielsweise über einen Authentisierungs-Code bzw. ein Passwort. Anhand dieser Zugangsdaten, d.h. des Benutzernamens und/oder des Authentisierungs-Codes, kann der Teilnehmer dann zunächst identifiziert werden und in einer anschließenden Authentifizierungs-Prozedur auch "authentifiziert" werden, um die Authentizität des Teilnehmers festzustellen bzw. zu verifizieren, ob der Teilnehmer "authentisch" ist. Nachfolgend kann der Teilnehmer dann in einer Autorisierungs-Prozedur für bestimmte Zugriffe oder Aktionen berechtigt bzw. "autorisiert" werden.

Des Weiteren ist unter einem begrenzten lokalen Umfeld des stationären, lokalen Netzwerkes in Abgrenzung zu einem globalen Netzwerk, z.B. das Internet oder ein Mobilfunknetzwerk, zu verstehen, dass ein Zugang zu dem stationären, lokalen Netzwerk, z.B. WLAN, lediglich aus einer begrenzten Anzahl an Positionen, nämlich im Bereich bzw. Umfeld des Betriebshofes, möglich ist.

Vorzugsweise ist außerdem vorgesehen, dass die Zugangsdaten eine Teilnehmer-Kennung (vgl. Benutzernamen) zum Identifizieren des Endgerätes bzw. des Fahrzeuges und/oder eine Netzwerk-Kennung (vgl. SSID, Service Set Identifier) zum Identifizieren des stationären, lokalen Netzwerkes und/oder einen Authentisierungs-Code zum Authentisieren des Endgerätes bzw. des Fahrzeuges gegenüber dem stationären, lokalen Netzwerk beinhalten. Mit diesen Zugangsdaten lässt sich der Teilnehmer in einfacher Weise im korrekten Netzwerk identifizieren und authentifizieren, so dass der Verbindungsaufbau insgesamt einfach gestaltet wird.

Vorzugsweise ist weiterhin vorgesehen, dass zusätzlich zu den Zugangsdaten erweiterte Authentisierungsdaten über das Zugangsnetzwerk bereitgestellt werden, wobei die erweiterten Authentisierungsdaten einen Authentisierungs-Token aufweisen zum Authentisieren des Endgerätes bzw. des Fahrzeuges gegenüber dem stationären, lokalen Netzwerk in Abhängigkeit von Authentisierungs-Bedingungen. Damit können zusätzliche Bedingungen vorgegeben werden, die beim automatisierten Authentisieren berücksichtigt werden. Beispielsweise kann vorgesehen sein, dass über die Authentisierungs-Bedingungen eine Authentisierungs-Gültigkeit und/oder Authentisierungs-Häufigkeit festlegt wird. Demnach kann festgelegt werden, beispielsweise vom Dienstleister-Backend, wie lange sich das Endgerät über den Authentisierungs-Code im stationären, lokalen Netzwerk authentisieren kann und wie oft eine Authentisierung möglich ist. Dies wird dann bei der nachfolgenden Authentifizierung automatisch berücksichtigt.

Vorzugsweise ist weiterhin vorgesehen, dass die Zugangsdaten drahtlos und/oder drahtgebunden über das Zugangsnetzwerk bereitgestellt werden, so dass eine flexible Möglichkeit der Übertragung dieser Daten an das Endgerät ermöglicht wird. Beispielsweise können die Zugangsdaten über das Internet und/oder über ein Mobilfunknetzwerk als Zugangsnetzwerk drahtlos bereitgestellt werden. Dadurch ergibt sich die Möglichkeit, die Zugangsdaten an nahezu beliebigen Positionen auf das Endgerät zu übertragen, bevor das Fahrzeug mit dem Endgerät am Betriebshof ankommt.

Vorzugsweise ist außerdem vorgesehen, dass durch das Autorisieren bei vorliegender Authentizität des Fahrzeuges ein automatisches Öffnen eines Zugangs des Betriebshofes, beispielsweise eines Tores oder einer Schranke, erfolgt und/oder ein manuelles oder automatisches Öffnen eines Be- und Entladestellen-Tores einer dem Fahrzeug zugeordneten Be- und Entladestelle auf einem Gelände des Betriebshofes zum Beladen oder Entladen einer Fracht zugelassen wird. Demnach können mit der Autorisierung im Rahmen des Verifizierens der Datenverbindung gleichzeitig auch Zugänge automatisiert freigegeben bzw. geöffnet werden, so dass der Automatisierungsgrad auf dem Betriebshof vorteilhafterweise weiter gesteigert werden kann.

Vorzugsweise kann dabei vorgesehen sein, dass die Be- und Entladestelle in Abhängigkeit von über die Datenverbindung übertragenen Daten zugeordnet wird, wobei dazu Beladungs-Informationen und/oder Entladungs-Informationen über die Datenverbindung übertragen werden. Vorteilhafterweise können also auch weitere übertragbare Daten berücksichtigt werden, die für die Autorisierung, insbesondere den Zugang zu Bereichen des Betriebshofes, relevant sind. Die Art der zu beladenden oder zu entladenden Fracht, die aus den Frachtbriefen hervorgeht und die in den Beladungs- bzw. Entladungs-Informationen enthalten ist, kann demnach herangezogen werden, um dem Fahrzeug eine Aktion auf dem Betriebshof zu erlauben oder zu verbieten. Zusätzlich kann so bei falscher Beladung oder Diebstahl der Hof bzw. das Hoftor auch verschlossen bleiben.

Vorzugsweise ist weiterhin vorgesehen, dass durch das Autorisieren bei vorliegender Authentizität des Fahrzeuges ein Übertragen von Fahrt-Informationen und/oder Stell-Informationen und/oder Fahrzeug-Steuer-Daten an das Endgerät erfolgt zum Koordinieren des Fahrzeuges auf dem Betriebshof, z.B. auch in Abhängigkeit der Beladungs- und Entladungs-Informationen. Demnach können dem Fahrzeug auf dem Betriebshof vorteilhafterweise auch Vorgaben darüber gemacht werden, wie sich das Fahrzeug auf dem Betriebshof zu bewegen hat, d.h. beispielsweise entlang einer bestimmten Trajektorie und/oder mit einer vorgegebenen maximalen Geschwindigkeit, vorzugsweise gekoppelt an die Berechtigungen, beispielsweise die zugeordnete Be- und Entladestelle, bzw. zu welcher Be- und Entladestelle bzw. zu welchem Stellplatz sich das Fahrzeug bewegen soll. Damit kann der Ablauf und die Koordination auf dem Betriebshof insgesamt vereinfacht werden, wobei auch dies wieder voll-automatisiert stattfinden kann, da auf automatisiert übertragbare Daten zurückgegriffen wird, anhand derer das System die Autorisierungs-Prozedur automatisiert durchführen kann. Vorzugsweise können diese Informationen über das Endgerät in der Sprache des Fahrers wiedergegeben werden, um die erwähnten Kommunikationsprobleme zu überwinden und somit zum schnelleren Ablauf beizutragen.

Vorzugsweise ist weiterhin vorgesehen, dass das automatisierte Aufbauen einer Datenverbindung zwischen dem Endgerät und dem Zentralmodul des stationären, lokalen Netzwerkes erfolgt, wenn sich das Fahrzeug mit dem Endgerät in einem Zugangsbereich des Betriebshofes befindet, wobei der Sende- und Empfangsbereich den Zugangsbereich ebenfalls abdeckt. Damit kann das Endgerät, nachdem die Zugangsdaten bereits vorab an das Endgerät übermittelt wurden, automatisch an einer Position unmittelbar vor dem Zugang zum Betriebshof eine Authentisierung anhand der Zugangsdaten und ggf. der erweiterten Authentisierungsdaten vornehmen. Dabei findet vorteilhafterweise eine direkte Anmeldung im Netzwerk statt, das daraufhin sofort eine Authentifizierung und Autorisierung vornehmen kann. Aufgrund der unmittelbaren Verbindung mit dem stationären lokalen Netzwerk können auch große Datenmengen schnell übertragen werden, anhand derer dann insbesondere die Autorisierung erfolgen kann. Die großen Datenmengen beziehen sich dabei auf die Informationen über die Fracht, z.B. Bildaufzeichnungen der CargoCam (Frachtüberwachungskamera) im Auflieger, sowie die weiteren Daten für bzw. über das Fahrzeug. Die Autorisierung an sich nimmt hierbei einen eher geringen Anteil der Datenmenge in Anspruch.

Vorzugsweise ist weiterhin vorgesehen, dass das automatisierte Übertragen der bereitgestellten Zugangsdaten an das Endgerät unter Verwendung des Zugangsnetzwerkes zu einem bestimmten festgelegten Zeitpunkt erfolgt und/oder, wenn sich das Fahrzeug und/oder das Endgerät an einer bestimmten festgelegten Position befinden. Die Festlegung und Feststellung der Position kann beispielsweise anhand von Positionssignalen (Globales Navigationssatellitensystem (GNSS): z.B. GPS, GLONAS, etc.) erfolgen, z.B. in Abhängigkeit einer Distanz zum Betriebshof. Die Festlegung des Zeitpunktes kann zudem in Abhängigkeit eines Eintreffens des Fahrzeuges am Betriebshof erfolgen. Damit kann vorab festgelegt werden, wann sinnvollerweise eine automatisierte Übertragung der bereitgestellten Zugangsdaten und/oder der erweiterten Authentisierungsdaten erfolgen soll.

Erfindungsgemäß ist weiterhin ein Datenübertragungs-System zur Durchführung des erfindungsgemäßen Verfahrens vorgesehen, mit einem Endgerät eines Telematiksystems, insbesondere Flottenmanagementsystems, einem mit dem Endgerät über ein Zugangsnetzwerk verbindbares Dienstleister-Backend sowie einem Zentralmodul eines stationären, lokalen Netzwerks. Das Endgerät kann dabei ein mobiles Endgerät, z.B. ein Handy, ein Tablet, ein Laptop, sein oder das Endgerät ist fest in dem Fahrzeug verbaut. Damit sind variable Ausführungen möglich, die teilweise ein einfaches Nachrüsten bzw. Anpassen ermöglichen.

Die Erfindung wird im Folgenden anhand von Figuren näher erläutert. Es zeigen:
- Fig. 1: eine schematische Ansicht eines Betriebshofes mit einem eintreffenden Fahrzeug; und
- Fig. 2: ein Flussdiagramm des erfindungsgemäßen Verfahrens.

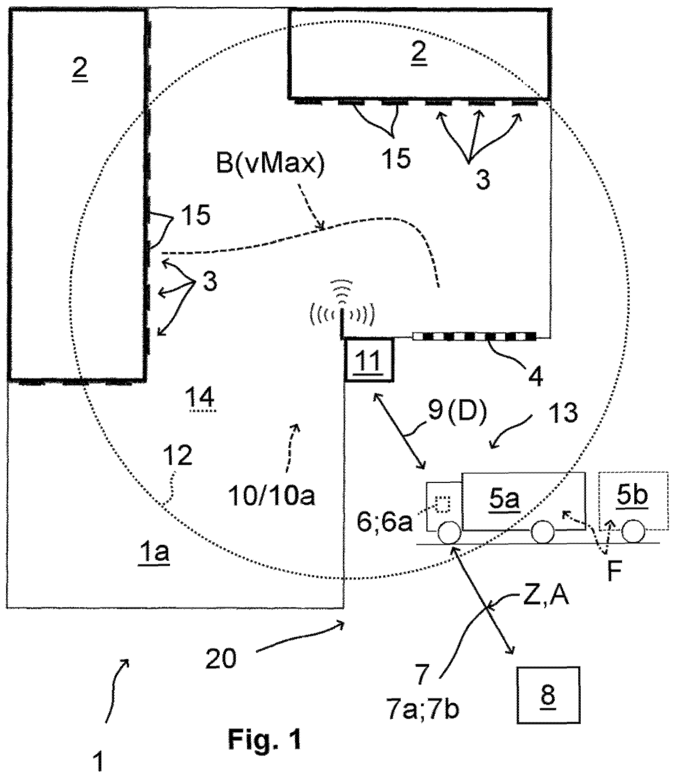

In Figur 1 ist ein Betriebshof 1 dargestellt, der an zwei Gebäuden 2 jeweils mehrere Be- und Entladestellen 3, z.B. Rampen, Mulden, Förderbänder, Tankstellen, Silos, Haufe, etc. zum Beladen und Entladen eines Fahrzeuges 5, insbesondere eines Nutzfahrzeuges, das ein oder mehrteilig (mit Anhängern) sein kann, aufweist. Der Betriebshof 1 ist über einen Zugang 4, beispielsweise ein Tor oder eine Schranke, zugänglich. Ein eintreffendes Fahrzeug 5, beispielsweise ein Nutzfahrzeug 5a mit einem Anhänger 5b, kann bei geöffnetem Zugang 4 auf das Gelände 1a des Betriebshofes 1 einfahren und sich zu einer der Be- und Entladestellen 3 bewegen, um dort eine zu transportierende Fracht F aufzuladen und/oder eine transportierte Fracht F abzuladen.

Der Betriebshof 1 erlaubt eine voll-automatisierte oder semi-automatisierte Abfertigung, wobei dazu auf einen automatisierten Austausch von Daten D mit dem Fahrzeug 5, d.h. mit dem Nutzfahrzeug 5a und/oder mit dem Anhänger 5b, zurückgegriffen wird. Durch den automatisierten Austausch der Daten D kann sowohl für einen automatisierten Zugang auf das Gelände 1a des Betriebshofes 1 gesorgt werden als auch für eine Koordination des Fahrzeuges 5 innerhalb des Betriebshofes 1.

Unter Koordination ist dabei zu verstehen, dass das Fahrzeug 5 beispielsweise zum korrekten Gebäude 2 sowie auch zur betreffenden Be- und Entladestelle 3 geleitet werden kann. Dazu kann beispielsweise eine Trajektorie B für das Fahrzeug 5 vorgegeben werden. In Verbindung damit können auch Fahrzeugsteuer-Daten DF für den Betriebshof 1, wie z.B. eine maximale Geschwindigkeit vMax, vorgegeben werden. Weiterhin können dem Fahrer gewisse zeitliche Abläufe auf dem Betriebshof 1 mitgeteilt werden. Außerdem können wichtige Informationen über die geladene oder die zu beladende Fracht F ausgetauscht werden. Die Kommunikation wird dadurch erheblich vereinfacht, da der Fahrer des Fahrzeuges 5 nicht aussteigen muss und keine Verständnisprobleme auftreten, wenn beispielsweise auf standardisierte Daten D zurückgegriffen wird.

Um dies zu ermöglichen, weist das Fahrzeug 5 ein ihm zugeordnetes Endgerät 6 auf, das Bestandteil eines Telematiksystems TS, insbesondere Flottenmanagementsystems (FMS), ist. Das Endgerät 6 kann fest in das Fahrzeug 5, d.h. in das Nutzfahrzeug 5a oder den Anhänger 5b, eingebaut sein oder aber als mobiles Endgerät 6a ausgeführt sein. Das mobile Endgerät 6 kann beispielsweise ein Handy, Laptop, Tablet, etc. sein, auf dem die Software des Flottenmanagementsystem FMS als Applikation bzw. Programm installiert ist.

Das Endgerät 6 ist dabei ausgebildet, über ein Zugangsnetzwerk 7 Zugangsdaten Z und ggf. auch erweiterte Authentisierungsdaten A von einem Dienstleister-Backend 8, beispielsweise von einem Programm bzw. einem Server eines Dienstleisters, zu erhalten. Die Datenübertragung über das Zugangsnetzwerk 7 findet dabei vorzugsweise verschlüsselt statt, so dass die Zugangsdaten Z und ggf. die erweiterten Authentisierungsdaten A sicher übertragen werden können.

Das Zugangsnetzwerk 7 ist vorteilhafterweise drahtlos, wobei das Zugangsnetzwerk 7 beispielsweise das Internet 7a und/oder ein Mobilfunknetzwerk 7b sein kann. Grundsätzlich kann das Zugangsnetzwerk 7 aber auch zumindest teilweise drahtgebunden sein. Beispielsweise kann das Endgerät 6 z.B. in einer Werkstatt oder auf einem beliebigen Betriebshof über ein Kabel mit einem Router verbunden werden, der wiederum direkt mit dem Dienstleister-Backend 8 oder indirekt über das Internet mit dem Dienstleister-Backend 8 verbunden ist. Bevorzugt ist jedoch ein drahtloses Zugangsnetzwerk 7 vorgesehen, über das während der Fahrt des Fahrzeuges 5 die Zugangsdaten Z und ggf. die erweiterten Authentisierungsdaten A empfangen werden können.

Das Endgerät 6 im eintreffenden Fahrzeug 5 ist außerdem ausgebildet, sich in ein stationäres und lokales Netzwerk 10, beispielsweise ein WLAN-Netzwerk 10a, des Betriebshofes 1 automatisiert einzuwählen. Dazu kann das Endgerät 6 eine Datenverbindung 9 mit einem Zentralmodul 11 des stationären lokalen Netzwerks 10 aufbauen. Das Zentralmodul 11 weist dabei einen bestimmten Sende- und Empfangsbereich 12 auf, der vorzugsweise einen Teil des Geländes 1a des Betriebshofes 1 sowie auch einen Zugangsbereich 13 des Betriebshofes 1 abdeckt. Der Zugangsbereich 13 ist der Bereich vor dem Zugang 4 des Betriebshofes 1, in den ein eintreffendes Fahrzeug 5 gelangt bevor es das Gelände 1a des Betriebshofes 1 durch den geöffneten Zugang 4 passieren kann.

Der Sende- und Empfangsbereich 12 deckt in Abgrenzung zu einem globalen Netzwerk lediglich ein lokales bzw. begrenztes räumliches Umfeld 14 ab, das hier hauptsächlich den Bereich um den Betriebshof 1 beinhaltet. Demnach ist auch ein Zugang zu dem stationären, lokalen Netzwerk 10 lediglich innerhalb des Sende- und Empfangsbereiches 12 des Zentralmoduls 11 und damit aus einer sehr begrenzten Anzahl an Positionen möglich.

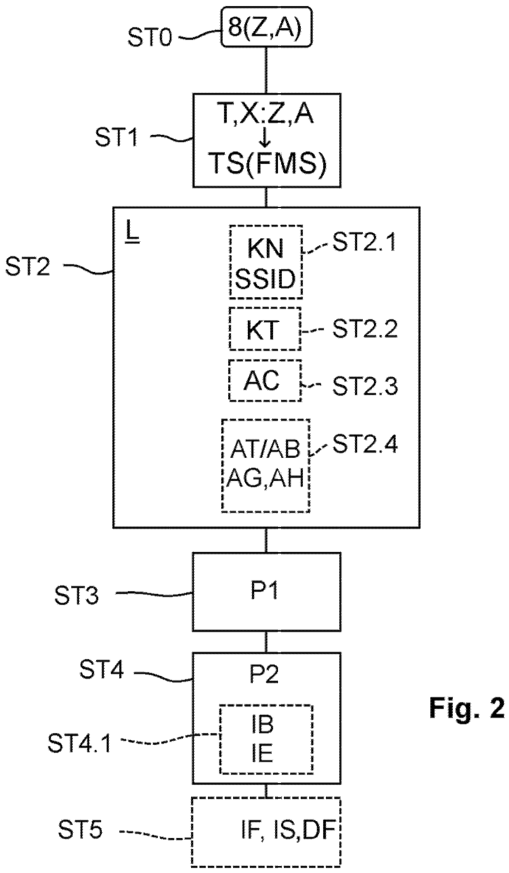

Sobald das Endgerät 6 in diesen Sende- und Empfangsbereich 12 gelangt, kann die Datenverbindung 9 zwischen dem Zentralmodul 11 und dem Endgerät 6 aufgebaut werden. Der Aufbau der Datenverbindung 9 zum Austausch von Daten D erfolgt dabei beispielsweise gemäß dem Flussdiagramm in Figur 2:
In einem ersten Schritt ST1, der in einer festgelegten Situation, beispielsweise zu einem bestimmten Zeitpunkt T und/oder an einer bestimmten Position X des Fahrzeuges 5, durchgeführt wird, werden die Zugangsdaten Z und ggf. auch die erweiterten Authentisierungsdaten A über das Zugangsnetzwerk 7 an das Endgerät 6 des Telematiksystems TS bzw. Flottenmanagementsystems FMS übertragen. Der Fahrer im Fahrzeug 5 ist dabei vorzugsweise nicht in der Lage, diese verschlüsselt übertragenen und vom Dienstleister-Backend 8 in einem vorangegangenen Schritt ST0 erzeugten und bereitgestellten Zugangsdaten Z und ggf. auch die erweiterten Authentisierungsdaten A zu lesen oder zu entschlüsseln und demnach zu verändern.

Das Fahrzeug 5 trifft nachfolgend am Betriebshof 1 ein und gelangt irgendwann in den Zugangsbereich 13 und damit auch in den Sende- und Empfangsbereich 12 des stationären, lokalen Netzwerkes 10 bzw. des Zentralmoduls 11. Daraufhin wird in einem zweiten Schritt ST2 (Authentisierung) mit den vorab bereitgestellten Zugangsdaten Z in einer Login-Prozedur L eine Datenverbindung 9 zwischen dem Endgerät 6 und dem Zentralmodul 11 hergestellt.

Anhand der Zugangsdaten Z kann dabei in einem ersten Zwischenschritt ST2.1 zunächst festgestellt werden, ob eine Netzwerk-Kennung KN des stationären, lokalen Netzwerks 10 korrekt ist, wobei dies beispielsweise anhand eines mit dem Zugangsdaten Z übermittelten Service Set Identifiers SSID geschehen kann.

In einem zweiten Zwischenschritt ST2.2 wird eine über die Zugangsdaten Z übermittelte Teilnehmer-Kennung TK eingegeben bzw. übermittelt, anhand derer der Teilnehmer bzw. das betreffende Fahrzeug 5 identifiziert werden kann. Dies ist vergleichbar mit der Eingabe eines Benutzernamens, der in dem Fall vom Dienstleister-Backend 8 erstellt und bereitgestellt wird und dem jeweiligen Fahrzeug 5 zugeordnet ist.

Anschließend wird in einem dritten Zwischenschritt ST2.3 ein über die Zugangsdaten Z übermittelter Authentisierungs-Code AC (vgl. Passwort) eingegeben bzw. übermittelt. Dieser wird vom Dienstleister-Backend 8 vorab individuell erstellt und der Teilnehmer-Kennung TK zugeordnet. Anhand des Authentisierungs-Codes AC authentisiert sich das Endgerät 6 bzw. das Fahrzeug 5 gegenüber dem stationären, lokalen Netzwerk 10.

In einem weiteren, optionalen vierten Zwischenschritt ST2.4 kann je nach Sicherheitsanforderung des stationären, lokalen Netzwerkes 10 auch noch auf die vorab übermittelten erweiterten Authentisierungsdaten A zurückgegriffen werden. Dies kann beispielsweise ein Authentisierungs-Token AT bzw. ein Zugangsprofil sein, das zusätzliche Authentisierungs-Bedingungen AB enthält. Beispielsweise kann darüber eine Authentisierungs-Gültigkeit AG festgelegt werden, d.h. über welchen Zeitraum sich das Fahrzeug 5 bzw. das Endgerät 6 über den Authentisierungs-Token AT in dem stationären, lokalen Netzwerk 10 authentisieren kann. Ist der Authentisierungs-Token AT abgelaufen, schlägt eine nachfolgende Authentifizierungs-Prozedur P1 fehl bzw. wird eine bestehende Datenverbindung unterbrochen. Weiterhin kann auch eine Authentisierungs-Häufigkeit AH festgelegt werden, wobei darüber festgelegt werden kann, dass der Authentisierungs-Token AT lediglich für eine Login-Prozedur L verwendet werden kann.

Anhand dieser Zugangsdaten Z sowie optional der erweiterten Authentisierungsdaten A kann das stationäre, lokale Netzwerk 10 das Fahrzeug 5 in einem anschließenden dritten Schritt ST3 in einer Authentifizierungs-Prozedur P1 identifizieren und authentifizieren. Anhand der für das jeweilige Fahrzeug 5 individuell erstellten Zugangsdaten Z wird also die Authentizität des Fahrzeuges 5 bzw. des Endgerätes 6 geprüft und zusammenhängend damit, ob das Fahrzeug 5 berechtigt ist, den Betriebshof 1 zu befahren.

In einem vierten Schritt ST4 findet nach erfolgreicher Authentifizierung des Fahrzeuges 5 bzw. des Endgerätes 6 eine Autorisierungs-Prozedur P2 statt. In dieser wird dem Fahrzeug 5 der Zugang sowohl zum stationären, lokalen Netzwerk 10 gewährt als auch zum Betriebshof 1. Dies kommt vorzugsweise dadurch zum Ausdruck, dass der Zugang 4 zum Betriebshof 1 automatisch geöffnet wird. Weiterhin können Daten D zum Koordinieren und Kommunizieren über die dann ausgebildete Datenverbindung 9 ausgetauscht werden.

In einem optionalen Zwischenschritt ST4.1 können beispielsweise Beladungs-Informationen IB und/oder Entladungs-Informationen IE über die Datenverbindung 9 ausgetauscht werden. Diese geben jeweils an, welche Fracht F das Fahrzeug 5 geladen hat bzw. welche Fracht F auf das Fahrzeug 5 geladen werden soll.

Damit können im Rahmen der Autorisierungs-Prozedur P2 Zugänge zu einzelnen Be- und Entladestellen 3 zum Beladen bzw. Entladen gewährt werden. Beispielsweise lassen sich Be- und Entladestellen-Tore 15 an den betreffenden Be- und Entladestellen 3, für die eine Berechtigung anhand der Informationen IB, IE gewährt wurde, manuell oder automatisiert öffnen. Damit bekommt der Fahrer des Fahrzeuges 5 lediglich zu den Be- und Entladestellen 3 Zugang, die ihm aufgrund seines Auftrages zugeordnet sind.

Das jeweilige Fahrzeug 5 (Teilnehmer) kann sich also gezielt und in einem voll-automatisierten Vorgang mit den Zugangsdaten Z und ggf. den erweiterten Authentisierungsdaten A im stationären, lokalen Netzwerk 10 anmelden, indem ein entsprechender Datenaustausch stattfindet, und erhält nach der Identifizierung, Authentifizierung und Autorisierung im stationären, lokalen Netzwerk 10 automatisch Zugang mit den entsprechend festgelegten Berechtigungen.

Mit erfolgreichem Abschluss der Authentifizierungs- und Autorisierungs-Prozeduren P1, P2 können gleichzeitig optional eine Reihe von weiteren Funktionen durch einen automatisierten Austausch von Daten D über die dann verifizierte Datenverbindung 9 durchgeführt werden:
Anhand der Beladungs- und Entladungs-Informationen IB, IE können vom Zentralmodul 11 über die Datenverbindung 9 beispielsweise Fahrt-Informationen IF und/oder Stell-Informationen IS und/oder Fahrzeug-Steuer-Daten DF an das Endgerät 6 übertragen werden (ST5). Die Fahrt-Informationen IF geben dabei an, wie sich das Fahrzeug 5 nach dem Auffahren auf das Gelände 1a des Betriebshofes 1 zu bewegen hat, um zur entsprechend zugeordneten Be- und Entladestelle 3 zu gelangen. Dies kann dem Fahrer über das Endgerät 6 beispielsweise in Form von Navigationsanweisungen und/oder einer Trajektorie B mitgeteilt werden. Über die Stell-Informationen IS können zudem Anweisungen bezüglich des Stellplatzes, beispielsweise eine die zugeordnete Be- und Entladestelle 3 bezeichnende Stellplatz-Nummer, übertragen werden, was ebenfalls auf dem Endgerät 6 visuell dargestellt werden kann. Die Fahrzeug-Steuer-Daten DF können ergänzend beispielsweise eine maximale Geschwindigkeit vMax enthalten, die auf dem Betriebshof 1 einzuhalten ist.

Aufgrund der Übertragung der jeweiligen Daten D, d.h. der Zugangsdaten Z, der erweiterten Authentisierungsdaten A, der Fahrt-Informationen IF, der Stell-Informationen IS, der Entladungs-Informationen IE, der Beladungs-Informationen IB, usw., über die Datenverbindung 9 an das Zentralmodul 11 kann eine Kommunikation und Koordination sprachunabhängig und vor allem voll-automatisiert erfolgen. Der Fahrer kann also mit seinem Endgerät 6 alle Anweisungen, die in dem stationären, lokalen Netzwerk 10 bzw. über das Zentralmodul 11 bereitgestellt werden, verstehen und entgegennehmen. Gleichzeitig können die Identifizierung, Authentifizierung und Autorisierung im stationären, lokalen Netzwerk 10 ohne Mitwirken des Fahrers erfolgen, wodurch der Automatisierungsgrad maßgeblich erhöht wird.

### Bezugszeichenliste (Teil der Beschreibung)

- 1: Betriebshof
- 1a: Gelände
- 2: Gebäude
- 3: Be- und Entladestelle
- 4: Zugang
- 5: Fahrzeug
- 5a: Nutzfahrzeug
- 5b: Anhänger
- 6: Endgerät
- 6a: mobiles Endgerät
- 7: Zugangsnetzwerk
- 7a: Internet
- 7b: Mobilfunktverbindung
- 8: Dienstleister-Backend
- 9: Datenverbindung
- 10: stationäres, lokales Netzwerk
- 10a: WLAN-Netzwerk
- 11: Zentralmodul
- 12: Sende- und Empfangsbereich
- 13: Zugangsbereich
- 14: Umfeld
- 15: Be- und Entladestellen-Tor
- 20: Datenübertragungs-System
- A: erweiterte Authentisierungsdaten
- AB: Authentisierungs-Bedingungen
- AC: Authentisierungs-Code
- AG: Authentisierungs-Gültigkeit
- AH: Authentisierungs-Häufigkeit
- AT: Authentisierungs-Token
- B: Trajektorie
- D: Daten
- DF: Fahrzeugsteuer-Daten
- F: Fracht
- FMS: Flottenmanagementsystem
- IB: Beladungs-Information
- IE: Entladungs-Information
- IF: Fahrt-Information
- IS: Stell-Information
- KN: Netzwerk-Kennung
- KT: Teilnehmer-Kennung
- L: Login-Prozedur
- P1: Authentifizierungs-Prozedur
- P2: Autorisierungs-Prozedur
- SSID: Service Set Identifier
- T: Zeitpunkt
- TS: Telematiksystem
- vMax: maximale Geschwindigkeit
- X: Position
- Z: Zugangsdaten
ST0,ST1,ST2,ST2.1,ST2.2,ST2.3,ST2.4,ST3,ST4,ST4.1,ST5
Schritte des Verfahrens

## Patentansprüche

1. Verfahren zum Aufbauen einer Datenverbindung (9) zwischen einem Endgerät (6) eines Telematiksystems (TS), insbesondere Flottenmanagementsystems (FMS), in einem Fahrzeug (5), insbesondere Nutzfahrzeug (5a) und/oder Anhänger (5b), und einem Zentralmodul (11) eines stationären lokalen Netzwerkes (10), wobei das stationäre, lokale Netzwerk (10) ein begrenztes räumliches Umfeld (14) eines Betriebshofes (1) abdeckt, mit mindestens den folgenden Schritten:
- Bereitstellen von Zugangsdaten (Z) zum Identifizieren und Authentisieren des Endgerätes (6) in dem stationären, lokalen Netzwerk (10), wobei die Zugangsdaten (Z) über ein Zugangsnetzwerk (7) bereitgestellt werden, wobei sich das Zugangsnetzwerk (7) von dem stationären, lokalen Netzwerk (7) unterscheidet (ST0);
- automatisiertes Übertragen der bereitgestellten Zugangsdaten (Z) an das Endgerät (6) unter Verwendung des Zugangsnetzwerkes (7) (ST1), wobei das automatisierte Übertragen der bereitgestellten Zugangsdaten (Z) an das Endgerät (6) unter Verwendung des Zugangsnetzwerkes (7) zu einem bestimmten festgelegten Zeitpunkt (T) erfolgt und/oder, wenn sich das Fahrzeug (5) an einer bestimmten festgelegten Position (X) befindet;
- automatisiertes Aufbauen einer Datenverbindung (9) zwischen dem Endgerät (6) und dem Zentralmodul (11) des stationären, lokalen Netzwerkes (10), wenn sich das Fahrzeug (5) mit dem Endgerät (6) in einem Sende- und Empfangsbereich (12) des Zentralmoduls (11) befindet (ST2),
wobei sich das Endgerät (6) dazu in einer Login-Prozedur (L) anhand der übertragenen Zugangsdaten (Z) gegenüber dem stationären, lokalen Netzwerk (10) automatisch identifiziert und authentisiert (ST2.1, ST2.2, ST2.3, ST2.4),
- automatisiertes Authentifizieren des Endgerätes (6) anhand der Zugangsdaten (Z) zum Prüfen einer Authentizität des Endgerätes (6) (ST3); und
- automatisiertes Autorisieren des Endgerätes (6) und/oder des Fahrzeuges (5), wenn das Endgerät (6) als authentisch eingestuft wird (ST4)
- Übertragen von Fahrt-Informationen (IF) und/oder Stell-Informationen (IS) und/oder Fahrzeug-Steuer-Daten (DF) an das Endgerät (6) zum Koordinieren des Fahrzeuges (5) auf dem Betriebshof (1) (ST5) durch den Schritt des automatisierten Autorisierens bei vorliegender Authentizität (ST4) des Fahrzeuges (5).

2. Verfahren nach Anspruch 1, **dadurch gekennzeichnet, dass** dem Fahrzeug (5) automatisch Zugang zum Betriebshof (1) und/oder dem Endgerät (6) automatisch ein Austausch von Daten (D) über die ausgebildete Datenverbindung (9) gewährt wird, wenn das Endgerät (6) als authentisch eingestuft wird.

3. Verfahren nach Anspruch 1 oder 2, **dadurch gekennzeichnet, dass** die Zugangsdaten (Z) eine Teilnehmer-Kennung (TK) zum Identifizieren des Endgerätes (6) (ST2.2) und/oder eine Netzwerk-Kennung (KN) zum Identifizieren des stationären, lokalen Netzwerkes (10) (ST2.1) und/oder einen Authentisierungs-Code (AC) zum Authentisieren des Endgerätes (6) gegenüber dem stationären, lokalen Netzwerk (10) (ST2.3) beinhalten.

4. Verfahren nach einem der vorhergehenden Ansprüche, **dadurch gekennzeichnet, dass** zusätzlich zu den Zugangsdaten (Z) erweiterte Authentisierungsdaten (A) über das Zugangsnetzwerk (7) bereitgestellt werden (ST2.4), wobei die erweiterten Authentisierungsdaten (A) einen Authentisierungs-Token (AT) aufweisen zum Authentisieren des Endgerätes (6) gegenüber dem stationären, lokalen Netzwerk (10) in Abhängigkeit von Authentisierungs-Bedingungen (AB).

5. Verfahren nach Anspruch 4, **dadurch gekennzeichnet, dass** über die Authentisierungs-Bedingungen (AB) eine Authentisierungs-Gültigkeit (AG) und/oder Authentisierungs-Häufigkeit (AH) festlegt wird.

6. Verfahren nach einem der vorhergehenden Ansprüche, **dadurch gekennzeichnet, dass** die Zugangsdaten (Z) drahtlos und/oder drahtgebunden über das Zugangsnetzwerk (7) bereitgestellt werden.

7. Verfahren nach Anspruch 6, **dadurch gekennzeichnet, dass** die Zugangsdaten (Z) über das Internet (7a) und/oder über ein Mobilfunknetzwerk (7b) als Zugangsnetzwerk (7) drahtlos bereitgestellt werden.

8. Verfahren nach einem der vorhergehenden Ansprüche, **dadurch gekennzeichnet, dass** durch das Autorisieren bei vorliegender Authentizität (ST4) des Fahrzeuges (5) ein automatisches Öffnen eines Zugangs (4) des Betriebshofes (1) erfolgt und/oder ein manuelles oder automatisches Öffnen eines Be- und Entladestellen-Tores (15) einer dem Fahrzeug (5) zugeordneten Be- und Entladestelle (3) auf einem Gelände (1a) des Betriebshofes (1) zum Beladen oder Entladen einer Fracht (F) zugelassen wird.

9. Verfahren nach Anspruch 8, **dadurch gekennzeichnet, dass** die Be- und Entladestelle (3) in Abhängigkeit von über die Datenverbindung (9) übertragenen Daten (D) zugeordnet wird, wobei dazu Beladungs-Informationen (IB) und/oder Entladungs-Informationen (IE) über die Datenverbindung (9) übertragen werden (ST4.1).

10. Verfahren nach einem der vorhergehenden Ansprüche, **dadurch gekennzeichnet, dass** stationäre, lokale Netzwerk (10) mit dem begrenzten räumlichen Umfeld (14) ein WLAN-Netzwerk (10a) ist.

11. Verfahren nach einem der vorhergehenden Ansprüche, **dadurch gekennzeichnet, dass** das automatisierte Aufbauen einer Datenverbindung (9) zwischen dem Endgerät (6) und dem Zentralmodul (11) des stationären, lokalen Netzwerkes (10) erfolgt, wenn sich das Fahrzeug (5) mit dem Endgerät (6) in einem Zugangsbereich (13) des Betriebshofes (1) befindet, wobei der Sende- und Empfangsbereich (12) des Zentralmoduls (11) den Zugangsbereich (13) ebenfalls abdeckt.

12. Datenübertragungs-System (20) zum Aufbauen einer Datenverbindung zwischen einem Endgerät eines Telematiksystems, insbesondere Flottenmanagementsystems, in einem Fahrzeug, insbesondere Nutzfahrzeug und/ oder Anhänger, und einem Zentralmodul eines stationären lokalen Netzwerkes, wobei das stationäre, lokale Netzwerk ein begrenztes räumliches Umfeld eines Betriebshofes abdeckt; zur Durchführung aller der Verfahrensschritte eines Verfahrens nach einem der vorhergehenden Ansprüche 1-11.

13. Zentralmodul eines stationären, lokalen Netzwerkes (10) zur Verwendung in einem Datenübertragungs-System (20) nach Anspruch 12 zum Aufbauen einer Datenverbindung zu einem Endgerät eines Telematiksystems, insbesondere Flottenmanagementsystems, in einem Fahrzeug , insbesondere Nutzfahrzeug und/oder Anhänger, wobei das stationäre, lokale Netzwerk (10) ein begrenztes räumliches Umfeld (14) eines Betriebshofes (1) abdeckt, wobei das Zentralmodul (11) ausgelegt ist, alle die Schritte eines Verfahrens nach einem der Ansprüche 1 bis 11 durchzuführen.

## Claims

1. Method for establishing a data connection (9) between a terminal device (6) of a telematics system (TS), in particular a fleet management system (FMS), in a vehicle (5), in particular a commercial vehicle (5a) and/or trailer (5b), and a central module (11) of a stationary local network (10), wherein the stationary local network (10) covers a delimited spatial environment (14) of a depot (1), the method comprising at least the following steps:
- providing access data (Z) for identifying and authenticating the terminal device (6) in the stationary local network (10), wherein the access data (Z) is provided via an access network (7), wherein the access network (7) is different (ST0) from the stationary local network (7);
- automatedly transmitting the provided access data (Z) to the terminal device (6) using the access network (7) (ST1), wherein the provided access data (Z) is automatedly transmitted to the terminal device (6) using the access network (7) at a specific determined time (T) and/or when the vehicle (5) is at a specific determined position (X);
- automatedly establishing a data connection (9) between the terminal device (6) and the central module (11) of the stationary local network (10) when the vehicle (5) comprising the terminal device (6) is located (ST2) in a transmitting and receiving range (12) of the central module (11),
wherein the terminal device (6) automatically identifies and authenticates itself to the stationary local network (10) in a login procedure (L) on the basis of the transmitted access data (Z) (ST2.1, ST2.2, ST2.3, ST2.4),
- automatedly authenticating the terminal device (6) on the basis of the access data (Z) in order to verify the authenticity of the terminal device (6) (ST3); and
- automatedly authorizing the terminal device (6) and/or the vehicle (5) if the terminal device (6) is classified as authentic (ST4)
- by means of the automated authorization step if the vehicle (5) is authentic (ST4), transmitting driving information (IF) and/or positioning information (IS) and/or vehicle control data (DF) to the terminal device (6) in order to coordinate the vehicle (5) at the depot (1) (ST5).

2. Method according to claim 1, **characterized in that** the vehicle (5) is automatically granted access to the depot (1) and/or the terminal device (6) is automatically granted an exchange of data (D) via the formed data connection (9) if the terminal device (6) is classified as authentic.

3. Method according to claim 1 or claim 2, **characterized in that** the access data (Z) include a subscriber identifier (TK) for identifying the terminal device (6) (ST2.2) and/or a network identifier (KN) for identifying the stationary local network (10) (ST2.1) and/or an authentication code (AC) for authenticating the terminal device (6) to the stationary local network (10) (ST2.3).

4. Method according to any of the preceding claims, **characterized in that,** in addition to the access data (Z), extended authentication data (A) is provided (ST2.4) via the access network (7), the extended authentication data (A) comprising an authentication token (AT) for authenticating the terminal device (6) to the stationary local network (10) depending on authentication conditions (AB).

5. Method according to claim 4, **characterized in that** an authentication validity (AG) and/or authentication frequency (AH) is determined via the authentication conditions (AC).

6. Method according to any of the preceding claims, **characterized in that** the access data (Z) are provided via the access network (7) wirelessly and/or via a wired connection.

7. Method according to claim 6, **characterized in that** the access data (Z) are provided wirelessly via the Internet (7a) and/or via a mobile network (7b) as an access network (7).

8. Method according to any of the preceding claims, **characterized in that,** by means of the authorization if the vehicle (5) is authentic (ST4), an entrance (4) to the depot (1) is automatically opened and/or a manual or automatic opening of a loading and unloading bay gate (15) of a loading and unloading bay (3) assigned to the vehicle (5) on a site (1a) of the depot (1) for loading or unloading freight (F) is permitted.

9. Method according to claim 8, **characterized in that** the loading and unloading bay (3) is assigned depending on data (D) transmitted via the data connection (9), loading information (IB) and/or unloading information (IE) being transmitted (ST4.1) for this purpose via the data connection (9).

10. Method according to any of the preceding claims, **characterized in that** the stationary local network (10) comprising the delimited spatial environment (14) is a WLAN network (10a).

11. Method according to any of the preceding claims, **characterized in that** a data connection (9) is automatedly established between the terminal device (6) and the central module (11) of the stationary local network (10) when the vehicle (5) comprising the terminal device (6) is located in an entrance region (13) of the depot (1), the transmitting and receiving range (12) of the central module (11) also covering the entrance region (13).

12. Data transmission system (20) for establishing a data connection between a terminal device of a telematics system, in particular a fleet management system, in a vehicle, in particular a commercial vehicle and/or trailer, and a central module of a stationary local network, wherein the stationary local network covers a delimited spatial environment of a depot; for carrying out all the method steps of a method according to any of the preceding claims 1-11.

13. Central module of a: stationary local network (10) for use in a data transmission system (20) according to claim 12 for establishing a data connection to a terminal device of a telematics system, in particular a fleet management system, in a vehicle, in particular a commercial vehicle and/or trailer, wherein the stationary local network (10) covers a delimited spatial environment (14) of a depot (1), wherein the central module (11) is designed to carry out all the steps of a method according to any of claims 1 to 11.

## Revendications

1. Procédé pour l'établissement d'une connexion de données (9) entre un terminal (6) d'un système télématique (TS), en particulier d'un système de gestion de flotte (FMS), dans un véhicule (5), en particulier un véhicule utilitaire (5a) et/ou une remorque (5b), et un module central (11) d'un réseau local fixe (10), dans lequel le réseau local fixe (10) couvre un environnement spatial limité (14) d'un dépôt (1), comportant au moins les étapes suivantes :
- fourniture de données d'accès (Z) pour l'identification et l'authentification du terminal (6) dans le réseau local fixe (10), dans lequel les données d'accès (Z) sont fournies par l'intermédiaire d'un réseau d'accès (7), dans lequel le réseau d'accès (7) est différent du réseau local fixe (7) (ST0) ;
- transmission automatisée des données d'accès (Z) fournies au terminal (6) en utilisant le réseau d'accès (7) (ST1), dans lequel la transmission automatisée des données d'accès (Z) fournies au terminal (6) en utilisant le réseau d'accès (7) est effectuée à un moment (T) déterminé et défini et/ou lorsque le véhicule (5) se trouve à une position (X) déterminée et définie ;
- établissement automatisé d'une connexion de données (9) entre le terminal (6) et le module central (11) du réseau local fixe (10) lorsque le véhicule (5) se trouve avec le terminal (6) dans une zone d'émission et de réception (12) du module central (11) (ST2),
dans lequel le terminal (6) est identifié et authentifié automatiquement par rapport au réseau local fixe (10) dans une procédure de connexion (L) à l'aide des données d'accès (Z) transmises (ST2.1, ST2.2, ST2.3, ST2.4),
- authentification automatisée du terminal (6) à l'aide des données d'accès (Z) pour vérifier une authenticité du terminal (6) (ST3) ; et
- autorisation automatisée du terminal (6) et/ou du véhicule (5) lorsque le terminal (6) est considéré comme authentique (ST4)
- transmission d'informations de déplacement (IF) et/ou d'informations de position (IS) et/ou de données de commande de véhicule (DF) au terminal (6) pour coordonner le véhicule (5) sur le dépôt (1) (ST5) par l'étape d'autorisation automatisée en présence d'une authenticité (ST4) du véhicule (5).

2. Procédé selon la revendication 1, **caractérisé en ce que** l'accès au dépôt (1) est automatiquement accordé au véhicule (5) et/ou un échange de données (D) est automatiquement accordé au terminal (6) par l'intermédiaire de la connexion de données (9) établie lorsque le terminal (6) est considéré comme authentique.

3. Procédé selon la revendication 1 ou 2, **caractérisé en ce que** les données d'accès (Z) comprennent un identifiant d'abonné (TK) pour l'identification du terminal (6) (ST2.2) et/ou un identifiant de réseau (KN) pour l'identification du réseau local fixe (10) (ST2.1) et/ou un code d'authentification (AC) pour l'authentification du terminal (6) par rapport au réseau local fixe (10) (ST2.3).

4. Procédé selon l'une des revendications précédentes,
**caractérisé en ce que,** en plus des données d'accès (Z), des données d'authentification étendues (A) sont fournies par l'intermédiaire du réseau d'accès (7) (ST2.4), dans lequel les données d'authentification étendues (A) présentent un jeton d'authentification (AT) pour l'authentification du terminal (6) par rapport au réseau local fixe (10) en fonction de conditions d'authentification (AB).

5. Procédé selon la revendication 4, **caractérisé en ce qu'**une validité d'authentification (AG) et/ou une fréquence d'authentification (AH) sont définies par l'intermédiaire des conditions d'authentification (AB).

6. Procédé selon l'une des revendications précédentes,
**caractérisé en ce que** les données d'accès (Z) sont fournies sans fil et/ou par fil par l'intermédiaire du réseau d'accès (7).

7. Procédé selon la revendication 6, **caractérisé en ce que** les données d'accès (Z) sont fournies sans fil par l'intermédiaire d'Internet (7a) et/ou par l'intermédiaire d'un réseau de téléphonie mobile (7b) en tant que réseau d'accès (7).

8. Procédé selon l'une des revendications précédentes,
**caractérisé en ce que,** par l'autorisation, en présence d'une authenticité (ST4) du véhicule (5), une ouverture automatique d'un accès (4) du dépôt (1) est effectuée et/ou une ouverture manuelle ou automatique d'une porte d'emplacement de chargement et de déchargement (15) d'un emplacement de chargement et de déchargement (3) associé au véhicule (5) sur un terrain (1a) du dépôt (1) est autorisée pour le chargement ou le déchargement d'un fret (F).

9. Procédé selon la revendication 8, **caractérisé en ce que** l'emplacement de chargement et de déchargement (3) est associé en fonction de données (D) transmises par l'intermédiaire de la connexion de données (9), dans lequel des informations de chargement (IB) et/ou des informations de déchargement (IE) sont transmises par l'intermédiaire de la connexion de données (9) (ST4.1).

10. Procédé selon l'une des revendications précédentes,
**caractérisé en ce que** le réseau local fixe (10) avec l'environnement spatial limité (14) est un réseau WLAN (10a).

11. Procédé selon l'une des revendications précédentes,
**caractérisé en ce que** l'établissement automatisé d'une connexion de données (9) entre le terminal (6) et le module central (11) du réseau local fixe (10) est effectué lorsque le véhicule (5) se trouve avec le terminal (6) dans une zone d'accès (13) du dépôt (1), dans lequel la zone d'émission et de réception (12) du module central (11) couvre également la zone d'accès (13).

12. Système de transmission de données (20) pour l'établissement d'une connexion de données entre un terminal d'un système télématique, en particulier d'un système de gestion de flotte, dans un véhicule, en particulier un véhicule utilitaire et/ou une remorque, et un module central d'un réseau local fixe, dans lequel le réseau local fixe couvre un environnement spatial limité d'un dépôt ; pour la réalisation de toutes les étapes de procédé d'un procédé selon l'une des revendications 1 à 11 précédentes.

13. Module central d'un réseau local fixe (10) destiné à être utilisé dans un système de transmission de données (20) selon la revendication 12 pour l'établissement d'une connexion de données avec un terminal d'un système télématique, en particulier d'un système de gestion de flotte, dans un véhicule, en particulier un véhicule utilitaire et/ou une remorque, dans lequel le réseau local fixe (10) couvre un environnement spatial limité (14) d'un dépôt (1), dans lequel le module central (11) est configuré pour réaliser toutes les étapes d'un procédé selon l'une des revendications 1 à 11.
